# EUROPEAN PATENT APPLICATION

(11) **EP 1 227 569 A1**
(43) Date of publication of application: **31.07.2002**
(21) Application number: 01300632.5
(22) Date of filing: 24.01.2001
(51) Int. Cl.: H02K 23/04, H02K 23/12

(54) **Electric motor with automatically adjustable output torque**

(71) Applicant: Power Vision Corp., Tapei City (TW); Wei, E-Tang, Taipei-city (TW)
(72) Inventor: Wei, E-Tang, Taipei City (TW)
(74) Representative: Jenkins, Peter David

(57) **Abstract**

A motor device with an automatically adjustable output torque includes two permanent magnets (11) disposed on an inner surrounding wall surface (101) of a hollow frame body (10) and adapted to produce a first magnetic field (Mi), and an armature (12) rotatable between the magnets (11). The armature (12) includes an armature core (120) having two core segments (123, 124) which are brought to alternately face the magnets (11) respectively when the armature (12) is rotated, and an armature winding (16) adapted to produce a second magnetic field. An output shaft (14) extends from one end of the armature core (120), and is adapted to drive a wheel of an electromotive vehicle. A commutator (15) is electrically connected to the armature winding (16), and is rotatable with a mounting shaft (141) extending from the other end of the armature core (120). Two brush members (31, 32) are connected to a DC power supply (3), and are disposed to respectively contact two conductive segments (151, 152) of the commutator (15) so as to provide direct current thereto. A regulating winding (13) is disposed on one of the armature core (120) and the magnets (11) to produce a third magnetic field. A controlling member (20) is disposed to control the flow of direct current to the regulating winding (13) to increase or decrease the amount of magnetic flux of the first magnetic field (Mi).

## Description

The invention relates to a motor device with an automatically adjustable output torque, more particularly to a motor device which can output different torques as desired.

Motors are indispensable to electromotive vehicles, such as electromotive motorcycles. The magnitude of the motor torque controls the speed and slope climbing capability of the vehicle. In order for an electromotive vehicle to accelerate instantly at starting and to climb a slope smoothly, motors are expected to produce a high torque at low rotational speeds.

Under ideal conditions, it is presumed that the input power of the motor should be equivalent to the rotational speed of the motor multiplied by torque. In other words, theoretically, the motor speed can be lowered to increase the torque at starting or slope-climbing, and the torque can be decreased to increase the motor speed when running on a smooth terrain or down a slope. Unfortunately, in practice, motors do not act according to the linear reverse-proportional relationship described above, and have their optimum operational ranges in terms of efficiency of energy conversion. If the optimum range of energy conversion efficiency of the motor is determined to be at a relatively high rotational speed, even if a large amount of electric power is inputted and motor speed is decreased, the accompanying considerable energy loss will result in wasteful heat generation of the motor, which not only will not achieve the expected considerable torque increase but will, conversely, shorten the service life of the motor. On the other hand, if the optimum range of energy conversion efficiency of the motor is determined to be at a relatively low rotational speed, with the motor torque increased at the same time, the electromotive vehicle will be suitable only for low-speed driving and cannot run at a higher speed. Even if a large amount of electric power is inputted, the energy conversion efficiency of the motor will still be drastically lowered. If the speed of the motor is increased nonetheless, the sustenance of the motor will be weakened due to waste of considerable electric power.

Such a dilemma has undoubtedly haunted manufacturers in the field, who are constantly trapped in the vicious cycle of increased motor power → increased battery capacity → increased vehicle weight and costs → unsatisfactory efficiency. An electromotive motorcycle thus developed weighs as much as 125 kilograms. Yet, its slope climbing capability and sustenance are much more inferior to a gasoline-fed motorcycle. This is why electromotive motorcycles are not popular even under subsidy from the government. Particularly, when the electromotive vehicle is started from a stationary state, if the supplied electric power is inadequate, the power output of the motor is insufficient for acceleration. If the rider increases the flow of electric current to the motor, the motor torque will increase to accelerate the vehicle, with the motor speed increasing at the same time, thereby resulting in a dangerous sudden surge of the vehicle.

Therefore, the main object of the present invention is to provide a motor device with an automatically adjustable output torque, which can output different torques as desired.

According to one aspect of the present invention, a motor device with an automatically adjustable output torque includes a hollow frame body, at least two magnetic pole pieces of opposite polarity, an armature, an output shaft, a mounting shaft, a commutator, two first brush members, a regulating winding, a controlling member and a sensor member. The frame body includes an inner surrounding wall surface that surrounds an axis, and that confines an accommodating space extending in an axial direction parallel to the axis. The magnetic pole pieces are disposed on the inner surrounding wall surface to extend in the axial direction and to be spaced diametrically apart from each other in a first transverse direction radial to the axial direction so as to produce a first magnetic field having a first magnetic flux therebetween. The armature is disposed to be rotatable between the two magnetic pole pieces, and includes an armature core and an armature winding. The armature core includes front and rear ends opposite to each other in the axial direction, and has two first core segments diametrically opposite to each other in a second transverse direction radial to the axis such that the two first core segments are alternately brought to radially and spacedly face the two magnetic pole pieces, respectively, when the armature is rotated about the axis. The armature winding has first and second ends, and is disposed on the armature core to produce a second magnetic field having a second magnetic flux in the second transverse direction when electric current flows therethrough via one of the first and second ends . The output shaft is disposed to extend from the front end of the armature core along the axis so as to be adapted to drive a wheel of a motorcycle. The mounting shaft is disposed to extend from the rear end of the armature core and is coaxial to the output shaft. The commutator is disposed to be rotated with the mounting shaft about the axis, and includes two first conductive segments insulated from each other and respectively and electrically connected to the first and second ends of the armature winding. The first brush members are adapted to be respectively connected to first positive and negative electrodes of a first DC power supply, and are disposed to respectively and slidably contact the two first conductive segments to provide a direct current to the armature winding via one of the two first conductive segments through one of the first and second ends of the armature winding, respectively, so as to initiate rotation of the armature as well as the commutator about the axis, while inducing a counter electromotive force in the armature, and to subsequently maintain the rotation by alternately providing the direct current to the first and second ends of the armature winding via alternate and sliding contact of the two first brush members with the two first conductive segments, respectively. The regulating winding has third and fourth ends adapted to be respectively connected to second positive and negative electrodes of a second DC power supply. The regulating winding is disposed on one of the armature core and the magnetic pole pieces to produce a third magnetic field having a third magnetic flux in one of the first and second transverse directions when electric current flows therethrough via one of the third and fourth ends. The controlling member is adapted to be disposed between the regulating winding and the second DC power supply and to be actuated to permit the flow of direct current from the second DC power supply through the third end to increase the flux amount of the first magnetic flux by adding that of the third magnetic flux so as to induce an increased counter electromotive force in the armature to thereby decrease the speed thereof when a greater torque is needed, or through the fourth end to diminish the flux amount of the first magnetic flux by counteraction of the third magnetic flux which is oriented in the opposite direction relative to that of the first magnetic flux so as to result in a decreased counter electromotive force in the armature to thereby increase the speed thereof when a lower torque is required. The sensor member is disposed to actuate the controlling member in response to change of the speed of the wheel of the motorcycle.

According to another aspect of the present invention, a motor device with an automatically adjustable output torque includes a hollow frame body, at least two magnetic pole pieces of opposite polarity, an armature, an output shaft, a mounting shaft, a commutator, first and second pairs of brush members, a controlling member and a sensor member. The frame body includes an inner surrounding wall surface that surrounds an axis and that confines an accommodating space extending in an axial direction parallel to the axis. The magnetic pole pieces are disposed on the inner surrounding wall surface to extend in the axial direction and to be spaced diametrically apart from each other in a first transverse direction radial to the axial direction so as to produce a first magnetic field having a first magnetic flux therebetween. The armature is disposed to be rotatable between the two magnetic pole pieces, and includes an armature core and first and second armature windings. The armature core includes front and rear ends opposite to each other in the axial direction, and has two pairs of first and second core segments, each pair of which are diametrically opposite to each other in one of second and third directions transverse to each other and radial to the axis such that the pairs of first and second core segments are alternately brought to radially and spacedly face the two magnetic pole pieces respectively when the armature is rotated about the axis. The first and second armature windings respectively have a first set of first and second ends, and a second set of third and fourth ends, which are disposed respectively on the pairs of first and second core segments so as to produce second and third magnetic fields having second and third magnetic fluxes in the second and third transverse directions respectively when electric current flows therethrough via one of the first and second ends and via one of the third and fourth ends, respectively. The output shaft is disposed to extend from the front end along the axis so as to be adapted to drive a wheel of a motorcycle. The mounting shaft is disposed to extend from the rear end, and is coaxial to the output shaft. The commutator is disposed to be rotated with the mounting shaft about the axis, and includes first and second pairs of conductive segments. The conductive segments of each of the first and second pairs are disposed diametrically spaced apart from each other relative to the axis, and are insulated from each other. The conductive segments of the first and second pairs are disposed alternately with each other. The conductive segments of the first pair are respectively and electrically connected to the first and second ends . The conductive segments of the second pair are respectively and electrically connected to the third and fourth ends. The first and second pairs of brush members are adapted to be respectively and electrically connected to first and second DC power supplies. The brush members of the first and second pairs are disposed alternately with each other in terms of the rotating path of the commutator. The brush members of the first pair are disposed to respectively and slidably contact one of the first and second pairs of conductive segments when a corresponding one of the pairs of first and second core segments are brought to radially and spacedly face the two magnetic pole pieces respectively where a corresponding one of the second and third transverse directions is aligned with the first transverse direction, so as to provide a direct current to a corresponding one of the first and second armature windings via a corresponding one of the first and second sets of ends and initiate rotation of the armature as well as the commutator about the axis, while inducing a first counter electromotive force in the armature, and to subsequently maintain the rotation by alternately providing the direct current to the first and second sets of ends via alternate and sliding contact of the brush members of the first pair with the first and second pairs of conductive segments, respectively. The brush members of the second pair are disposed to respectively and slidably contact the other one of the first and second pairs of conductive segments so as to provide a direct current to the other corresponding one of the first and second armature windings via the other corresponding one of the first and second sets of ends, so as to produce the corresponding one of the second and third magnetic fluxes in the corresponding one of the second and third transverse directions which is transverse to the first transverse direction. The controlling member is adapted to be actuated to permit the flow of direct current from the second DC power supply through one of the first and second ends or through one of the third and fourth ends so as to produce the corresponding one of the second and third magnetic fluxes in the corresponding one of the second and third transverse directions which is transverse to the first transverse direction, which has a flux component in the first transverse direction resulting in either an increase of the flux amount of the first magnetic flux when the flux component is at the same direction as the first magnetic flux, so as to induce an increased counter electromotive force in the armature to thereby decrease the speed thereof when a greater torque is needed, or a diminishing of the flux amount of the first magnetic flux when the flux component is at the opposite direction to the first magnetic flux so as to result in a decreased counter electromotive force in the armature to thereby increase the speed thereof when a lower torque is required. The sensor member is disposed to actuate the controlling member in response to change of the speed of the wheel of the motorcycle.

According to a further aspect of the present invention, a motor device with an automatically adjustable output torque includes a hollow frame body, at least two magnetic pole pieces, at least two mounting core pieces, an armature, an output shaft, a mounting shaft, a commutator, two first brush members, a regulating winding, a controlling member, and a sensor member. The frame body includes an inner surrounding wall surface that surrounds an axis and that confines an accommodating space extending in an axial direction parallel to the axis. The magnetic pole pieces are of opposite polarity, and are disposed on the inner surrounding wall surface to extend in the axial direction and to be spaced diametrically apart from each other in a first transverse direction radial to the axial direction so as to produce a first magnetic field having a first magnetic flux therebetween. The mounting core pieces are disposed on the inner surrounding wall surface to extend in the axial direction and to be spaced diametrically apart from each other in the first transverse direction radial to the axial direction. The mounting core pieces are oriented to be respectively spaced apart from and in alignment with the two magnetic pole pieces in the axial direction. The armature is disposed to be rotatable between the two magnetic pole pieces and between the two mounting core pieces, and includes an armature core and an armature winding. The armature core includes front and rear ends opposite to each other in the axial direction, and has two first core segments diametrically opposite to each other in a second transverse direction radial to the axis such that the two first core segments are alternately brought to radially and spacedly face the two magnetic pole pieces, respectively, and to radially and spacedly face the two mounting core pieces, respectively, when the armature is rotated about the axis. The armature winding has first and second ends, and is disposed on the armature core to produce a second magnetic field having a second magnetic flux in the second transverse direction when electric current flows therethrough via one of the first and second ends. The output shaft is disposed to extend from the front end of the armature core along the axis so as to be adapted to drive a wheel of a motorcycle. The mounting shaft is disposed to extend from the rear end of the armature core and coaxial to the output shaft. The commutator is disposed to be rotated with the mounting shaft about the axis, and includes two first conductive segments insulated from each other and respectively and electrically connected to the first and second ends of the armature winding. The first brush members are adapted to be respectively connected to first positive and negative electrodes of a first DC power supply, and are disposed to respectively and slidably contact the two first conductive segments to provide a direct current to the armature winding via one of the two first conductive segments through one of the first and second ends of the armature winding, respectively, so as to initiate rotation of the armature as well as the commutator about the axis, while inducing a counter electromotive force in the armature, and to subsequently maintain the rotation by alternately providing the direct current to the first and second ends of the armature winding via alternate and sliding contact of the two first brush members with the two first conductive segments, respectively. The regulating winding has third and fourth ends adapted to be respectively connected to second positive and negative electrodes of a second DC power supply, and is disposed on one of the two mounting core pieces to produce a third magnetic field having a third magnetic flux in one of the first and second transverse directions when electric current flows therethrough via one of the third and fourth ends. The controlling member is adapted to be disposed between the regulating winding and the second DC power supply and to be actuated to permit the flow of direct current from the second DC power supply through the third end to increase the flux amount of the first magnetic flux by adding that of the third magnetic flux so as to induce an increased counter electromotive force in the armature to thereby decrease the speed thereof when a greater torque is needed, or through the fourth end to diminish the flux amount of the first magnetic flux by counteraction of the third magnetic flux which is oriented in the opposite direction relative to that of the first magnetic flux so as to result in a decreased counter electromotive force in the armature to thereby increase the speed thereof when a lower torque is required. The sensor member is disposed to actuate the controlling member in response to change of the speed of the wheel of the motorcycle.

Other features and advantages of the present invention will become apparent in the following detailed description of the preferred embodiment with reference to the accompanying drawings, of which:
Figure 1 is a perspective schematic view of the first preferred embodiment of a motor device according to the present invention;
Figure 2 is a schematic view illustrating the state of the first preferred embodiment when the first magnetic field is generated;
Figures 3 and 4 are schematic views illustrating the different stages of operation of the first preferred embodiment;
Figure 4A is a schematic view of the first preferred embodiment, showing the mounting seat member units;
Figure 5A is a perspective schematic view of the second preferred embodiment of a motor device of the present invention;
Figure 5B is a sectional view of the second preferred embodiment;
Figure 6 is a perspective schematic view of the third preferred embodiment of a motor device of the present invention;
Figures 7 to 12 are schematic views illustrating different stages of operation of the third preferred embodiment;
Figures 13 and 14 are schematic views of the fourth preferred embodiment of a motor device of the present invention.

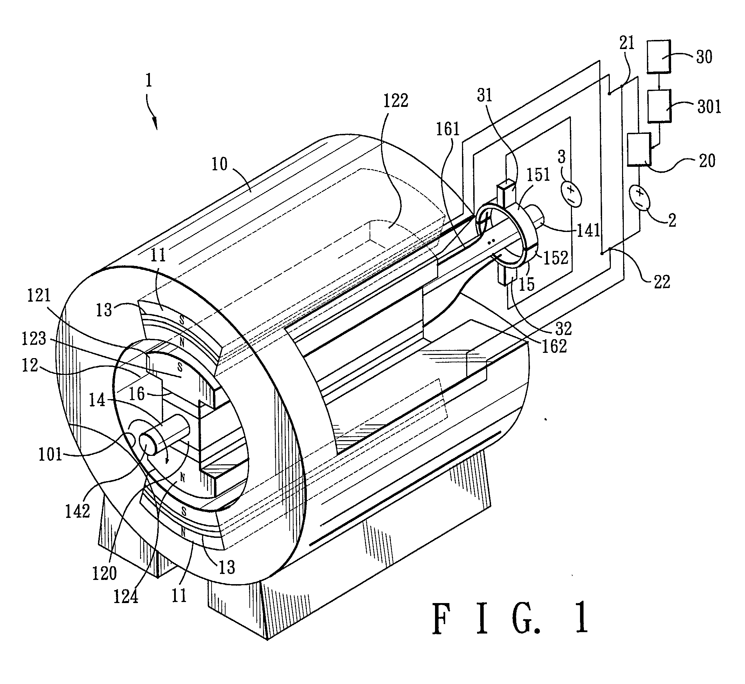

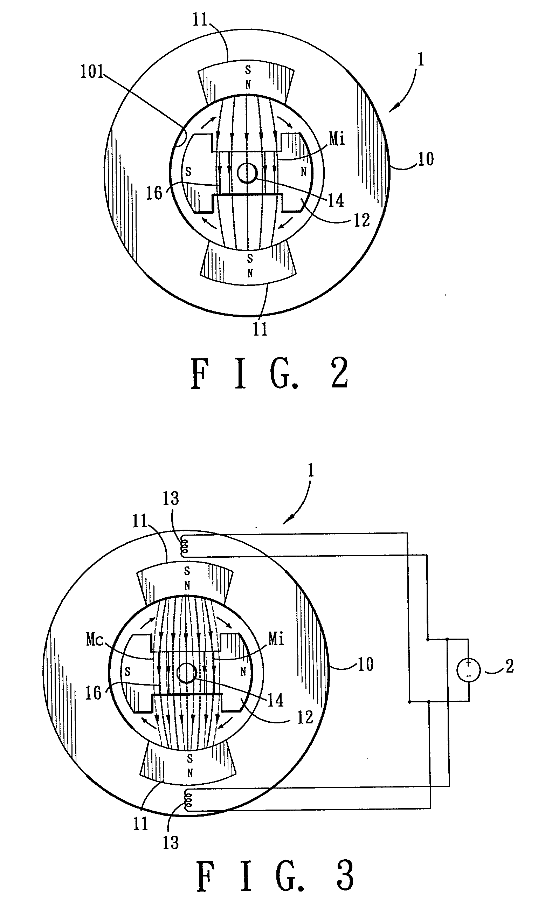

Referring to Figures 1 to 4A, the first preferred embodiment of a motor device with an automatically adjustable output torque according to the present invention is shown to include a hollow frame body 10, at least two magnetic pole pieces 11, an armature 12, an output shaft 14, a mounting shaft 141, a commutator 15, two first brush members 31, 32, a regulating winding 13, a controlling member 20, and a sensor member 30.

The frame body 10 includes an inner surrounding wall surface 101 that surrounds an axis and that confines an accommodating space extending in an axial direction parallel to the axis.

The two magnetic pole pieces 11 are of opposite polarity, and are disposed on the inner surrounding wall surface 101 to extend in the axial direction and to be spaced diametrically apart from each other in a first transverse direction radial to the axial direction so as to produce a first magnetic field (Mi) having a first magnetic flux therebetween. In this embodiment, the magnetic pole pieces 11 are two permanent magnets, which include two magnetic poles of opposite polarity oriented to be diametrically spaced from each other.

The armature 12 is disposed to be rotatable between the two magnetic pole pieces 11, and includes an armature core 120 and an armature winding 16. The armature core 120 has front and rear ends 121, 122 opposite to each other in the axial direction, and includes two first core segments 123, 124 diametrically opposite to each other in a second transverse direction radial to the axis such that the first core segments 123, 124 are alternately brought to radially and spacedly face the magnetic pole pieces 11, respectively, when the armature 12 is rotated about the axis. The armature winding 16 has first and second ends 161, 162, and is disposed on the armature core 120 to produce a second magnetic field having a second magnetic flux in the second transverse direction when an electric current flows therethrough via one of the first and second ends 161, 162 of the armature winding 16.

The output shaft 14 is disposed to extend from the front end 121 of the armature core 120 along the axis so as to be adapted to drive a wheel of a motorcycle (not shown).

The mounting shaft 141 is disposed to extend from the rear end 122 of the armature core 120, and is coaxial to the output shaft 14.

The commutator 15 is disposed to be rotated with the mounting shaft 141 about the axis, and includes two first conductive segments 151, 152 that are insulated from each other and that are respectively and electrically connected to the first and second ends 161, 162 of the armature winding 16.

The two first brush members 31, 32 are adapted to be respectively connected to first positive and negative electrodes of a first DC power supply 3, and are disposed to respectively and slidably contact the two first conductive segments 151, 152 of the commutator 15 to provide a direct current to the armature winding 16 via one of the two first conductive segments 151, 152 through one of the first and second ends 161, 162 of the armature winding 16, respectively, so as to initiate rotation of the armature 12 and the commutator 15 about the axis while inducing a counter electromotive force in the armature 12, and to subsequently maintain the rotation of the armature 12 and the commutator 15 by alternately providing a direct current to the first and second ends 161, 162 of the armature winding 16 via alternate and sliding contact of the first brush members 31, 32 with the first conductive segments 151, 152, respectively, when the commutator 15 continues to rotate with the mounting shaft 141.

The regulating winding 13 has third and fourth ends 21, 22 adapted to be respectively connected to second positive and negative electrodes of a second DC power supply 2, and is disposed on one of the armature core 120 and the magnetic pole pieces 11 to produce a third magnetic field (Mc) having a third magnetic flux in one of the first and second transverse directions when an electric current flows therethrough via one of the third and fourth ends 21, 22 thereof. In this embodiment, the regulating winding 13 is wound on each of the magnetic pole pieces 11, and includes two regulating winding units respectively disposed on the two permanent magnets 11 so as to produce the third magnetic field (Mc) having the third magnetic flux in the first transverse direction when the electric current flows therethrough via one of the third and fourth ends 21, 22 thereof.

The controlling member 20 is disposed between the regulating winding 13 and the second DC power supply 2, and is actuated to permit the flow of a direct current from the second DC power supply 2 through one of the third and fourth ends 21, 22 of the regulating winding 13. When the direct current flows through the third end 21, the flux amount of the first magnetic flux is increased by a flux amount of the third magnetic flux added thereto so as to induce an increased counter-electromotive force in the armature 12, thereby decreasing the speed of the armature 12 when a greater torque is needed. On the contrary, when the direct current flows through the fourth end 22, the flux amount of the first magnetic flux is diminished by counteraction of the third magnetic flux that is oriented in the opposite direction relative to the direction of the first magnetic flux so as to result in a decreased counter-electromotive force in the armature 12, thereby increasing the speed of the armature 12 when a lower torque is required.

The sensor member 30 is disposed to actuate the controlling member 20 when the change of speed of the wheel of the motorcycle (not shown) is within a predetermined range. The sensor member 30 includes a feedback circuit 301 associated with the wheel of the motorcycle (not shown) such that a fluctuation of the speed of the wheel induces the feedback circuit 301 to actuate the controlling member 20 to direct the direct current from the second DC power supply 2 to flow through one of the third and fourth ends 21, 22 of the regulating winding 13.

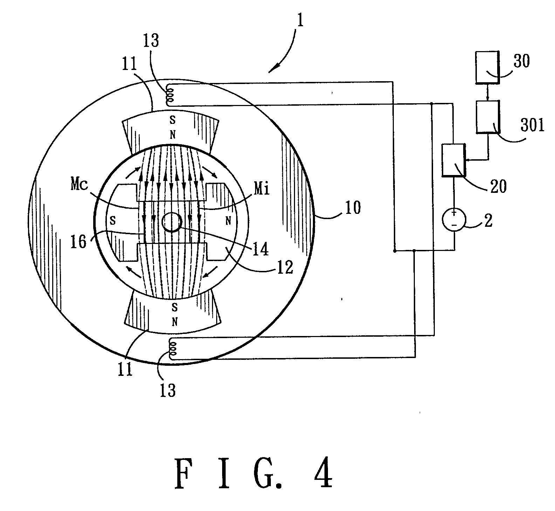

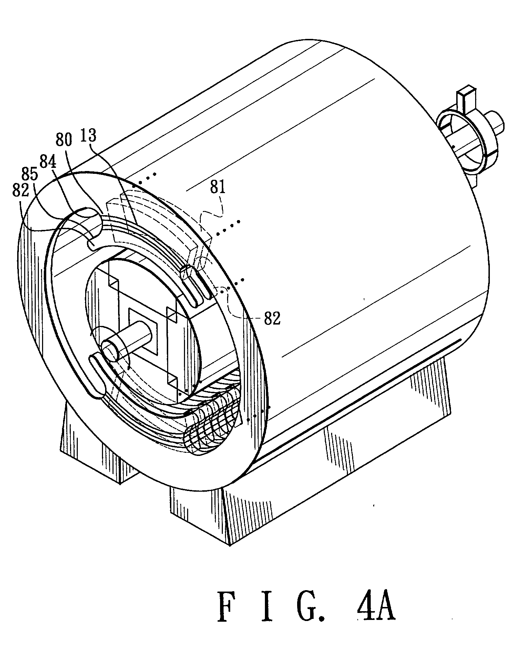

Referring to Figure 4A, the motor device further includes two sets of a plurality of mounting seat member units 80 that are disposed on the inner surrounding wall surface 101 of the frame body 10, and that are diametrically spaced apart from each other in the first transverse direction to receive two sets of a plurality of permanent magnet units 81 therein. Each of the plurality of mounting seat member units 80 includes a neck portion 84 disposed on the inner surrounding wall surface 11, and forms an array together with the rest of the corresponding set of mounting seat members units 80 in the axial direction. The plurality of the mounting seat member units 80 respectively extend in the first transverse direction towards the axis so as to be wound about a centerline parallel to the first transverse direction by the regulating winding 13. Each of the plurality of mounting seat member units 80 includes an enlarged portion 82 disposed on the neck portion 84 and distal to the inner surrounding wall surface 101 so as to form a retaining shoulder portion 85 at a juncture between the neck portion 84 and the enlarged portion 82, thereby preventing the regulating winding 13 from slipping out of the neck portion 84.

Based on the above construction, when an electromotive motorcycle (not shown) equipped with the preferred embodiment requires a relatively high torque for starting or slope climbing, the feedback circuit 301 will detect the decrease of the speed of the motorcycle and send a first signal to the controlling member 20 so as to activate the second power supply 2 to output a positive control current to the regulating winding 13 to thereby slow down the rotational speed of the motor device and increase the output torque. As such, the motorcycle can run at a relatively low speed but has sufficient torque to climb a slope. When the motorcycle runs on a smooth terrain, the feedback circuit 301 will detect the increase of speed of the motorcycle and send a second signal to the controlling member 20 so as to activate the second power supply 2 to output a negative control current to the regulating winding 13 to thereby increase the rotational speed of the motor device and decrease the output torque. As such, the motorcycle can run at a relatively high speed without undue loss of energy.

The above embodiment illustrates the arrangement of the regulating winding 13 on the magnetic pole pieces 11 in combination with the control currents to control the direction of the third magnetic flux of the third magnetic field (Mc) of the regulating winding 13 so as to regulate the intensity of the first magnetic field (Mi) to thereby change the output torque. Certainly, the arrangement of the regulating winding 13 is not restricted to that described hereinabove so long as a regulating magnetic field can be generated to regulate the intensity of the first magnetic field (Mi). In addition, the magnetic pole pieces 11 may be composed of more than two permanent magnets, and the arrangement of the permanent magnets is not limited to a diametrically opposite relationship, although the arrangement of two diametrically opposite permanent magnets can achieve a more desirable effect.

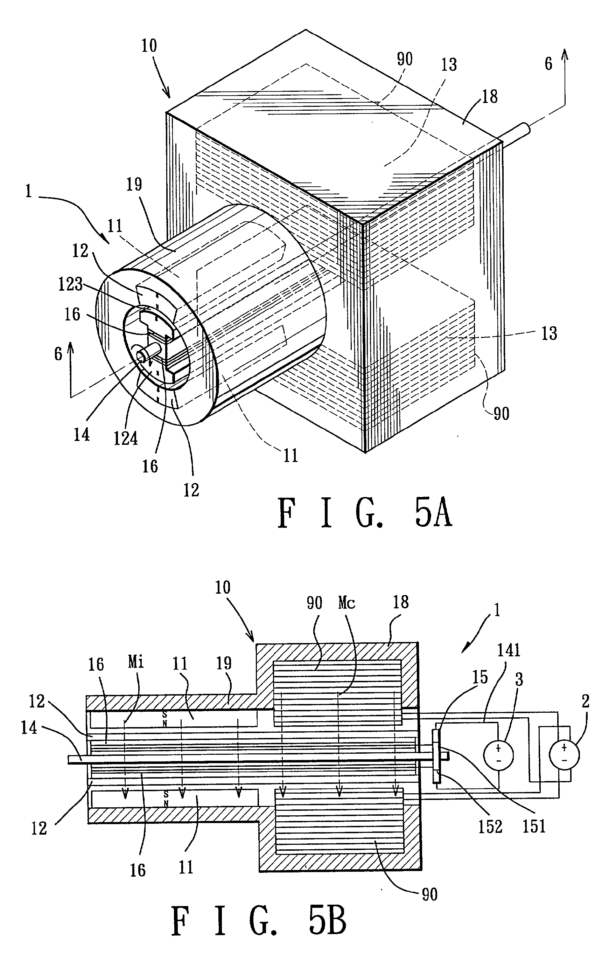

Reference is made to Figures 5A and 5B, which illustrate the second preferred embodiment of the motor device of this invention. The difference between this embodiment and the first preferred embodiment resides in that the frame body 10 includes a rectangular frame portion 18 and a circular frame portion 19. Two mounting core pieces 90 of soft iron are disposed on the inner surrounding wall surface of the rectangular frame portion 18 to extend in the axial direction and to be spaced diametrically apart from each other in the first transverse direction radial to the axial direction. The two mounting core pieces 90 are oriented to be respectively spaced apart from and in alignment with the two magnetic pole pieces 11, which are disposed in the circular frame portion 19, in the axial direction. The regulating winding 13 is disposed on the mounting core pieces 90. The armature 12 is disposed to be rotatable between two magnetic pole pieces 11 and between the two mounting core pieces 90. When the armature 12 is rotated about the axis, the two first core segments 123, 124 are alternately brought to radially and spacedly face the two magnetic pole pieces 11 respectively, and to radially and spacedly face the two mounting core pieces 90, respectively. When the motor device of this invention is applied to an electromotive motorcycle (not shown), since the magnetic pole pieces 11 are axially spaced apart from the regulating winding 13, the magnetic field effect generated by the regulating winding 13 when electric current flows therethrough is enhanced, thereby achieving the advantages of reduced electric power consumption and enhanced sustenance of the motorcycle.

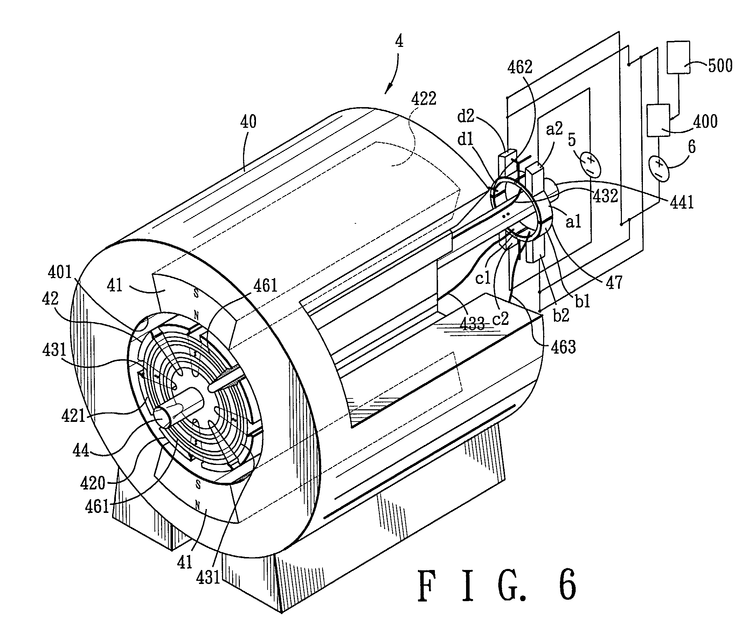

Figure 6 shows the third preferred embodiment of a motor device with automatically adjustable output torque according to this invention. As shown, the second preferred embodiment includes a hollow frame body 40, at least two magnetic pole pieces 41, an armature 42, an output shaft 44, a mounting shaft 441, a commutator 47, first and second pairs of brush members a2, c2 and b2 , d2, a controlling member 400, and a sensor member 500.

The frame body 40 includes an inner surrounding wall surface 401 that surrounds an axis and that confines an accommodating space extending in an axial direction parallel to the axis.

The magnetic pole pieces 41 are of opposite polarity, and are disposed on the inner surrounding wall surface 401 to extend in the axial direction and to be spaced diametrically apart from each other in a first transverse direction radial to the axial direction so as to produce a first magnetic field (Mi) having a first magnetic flux therebetween.

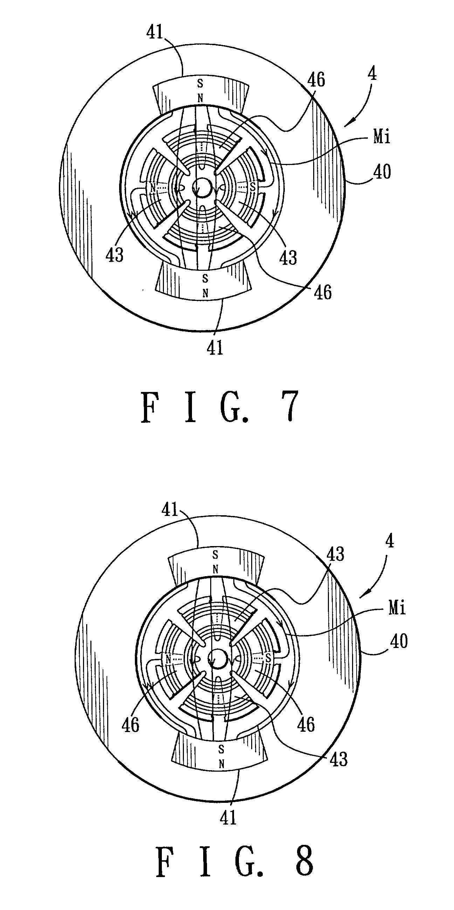

The armature 42 is disposed to be rotatable between the two magnetic pole pieces 41, and includes an armature core 420 and first and second armature windings 431, 461. The armature core 420 has front and rear ends 421, 422 opposite to each other in the axial direction, and includes a pair of first core segments 43 and a pair of second core segments 46 (see Figures 7 and 8). The first core segments 43, as well as the second core segments 46, are diametrically opposite to each other in one of second and third directions transverse to each other and radial to the axis such that the pairs of first and second core segments 43, 46 are alternately brought to radially and spacedly face the two magnetic pole pieces 41, respectively, when the armature 42 is rotated about the axis. The first and second armature windings 431, 461 are respectively provided with a first set of first and second ends 432, 433, and a second set of third and fourth ends 462, 463, which are disposed respectively on the pairs of the first and second core segments 43, 46 so as to produce second and third magnetic fields having second and third magnetic fluxes in the second and third transverse directions, respectively, when an electric current flows therethrough via one of the first and second ends 432, 433 and via one of the third and fourth ends 462, 463, respectively.

The output shaft 44 is disposed to extend from the front end 421 of the armature core 420 along the axis so as to be adapted to drive a wheel of a motorcycle (not shown).

The mounting shaft 441 is disposed to extend from the rear end 422 of the armature core 420, and is coaxial to the output shaft 44.

The commutator 47 is disposed to be rotated with the mounting shaft 441 about the axis, and includes a first pair of conductive segments a1, c1 and a second pair of conductive segments b1, d1 such that the conductive segments a1, c1, b1, d1 of each of the first and second pairs are disposed diametrically spaced apart from each other relative to the axis, and are insulated from each other. In addition, the conductive segments a1, c1, b1, d1 of the first and second pairs are alternately disposed. The conductive segments a1, c1 of the first pair are respectively and electrically connected to the first and second ends 432, 433 of the first armature winding 431. The conductive segments b1, d1 of the second pair are respectively and electrically connected to the third and fourth ends 462, 463 of the second armature winding 461.

The first and second pairs of brush members a2, c2, b2, d2 are adapted to be respectively and electrically connected to first and second DC power supplies 5, 6. The brush members a2, c2, b2, d2 of the first and second pairs are disposed alternately in terms of the rotating path of the commutator 47. The brush members a2, c2 of the first pair are disposed to respectively and slidably contact one of the first and second pairs of conductive segments a1, c1, b1, d1 when a corresponding one of the pairs of first and second core segments 43, 46 is brought to radially and spacedly face the two magnetic pole pieces 41, respectively, while a corresponding one of the second and third transverse directions is aligned with the first transverse direction, so as to provide a direct current to a corresponding one of the first and second armature windings 431, 461 via a corresponding one of the first and second sets of ends 432, 433, 462, 463 and to initiate rotation of the armature 42 as well as the commutator 47 about the axis while inducing a first counter electromotive force in the armature 42. The rotation is subsequently maintained by alternately providing the'direct current to the first and second sets of ends 432, 433, 462, 463 via alternate and sliding contact of the brush members a2, c2 of the first pair with the first and second pairs of conductive segments a1, c1, b1, d1, respectively. The brush members b2, d2 of the second pair are disposed to respectively and slidably contact the other one of the first and second pairs of conductive segments a1, c1, b1, d1 so as to provide a direct current to the other corresponding one of the first and second armature windings 431, 461 via the other corresponding one of the first and second sets of ends 432, 433, 462, 463 so as to produce the corresponding one of the second and third magnetic fluxes in the other corresponding one of the second and third transverse directions which is transverse to the first transverse direction.

With reference to Figure 7, in combination with Figure 5, when the brush members a2, c2 respectively contact the conductive segments a1, c1, direct current flows to the first armature windings 431 on the first core segments 43, thereby generating the second magnetic field, which is substantially perpendicular to the first magnetic field (Mi). Simultaneously, the armature 42 and the commutator 47 are brought to rotate about the axis, with each of the first core segments 43 brought to displace about 90 degrees from a first position shown in Figure 7 to a second position shown in Figure 8. Corresponding to the second position shown in Figure 8, the brush members a2, c2 will respectively contact the conductive segments b1, d1 so that direct current flows to the second armature windings 461 on the second core segments 46 to generate the second magnetic field and to maintain rotation of the armature 42 and the commutator 47. As such, rotation of the armature 42 and the commutator 47 is maintained to output the required torque.

The controlling member 400 is adapted to be actuated to permit the flow of direct current from the second DC power supply 6 through one of the first and second ends 432, 433 or through one of the third and fourth ends 462, 463 so as to produce the corresponding one of the second and third magnetic fluxes in the corresponding one of the second and third transverse directions which is transverse to the first transverse direction, which has a flux component in the first transverse direction resulting in either an increase of the flux amount of the first magnetic flux when the flux component is at the same direction as the first magnetic flux, so as to induce an increased counter electromotive force in the armature 42 to thereby decrease the speed thereof when a greater torque is needed, or a diminishing of the flux amount of the first magnetic flux when the flux component is at the opposite direction to the first magnetic flux so as to result in a decreased counter electromotive force in the armature 42 to thereby increase the speed thereof when a lower torque is required.

The sensor member 500 is disposed to actuate the controlling member 400 when the change of speed of the wheel of the motorcycle (not shown) is within a predetermined range.

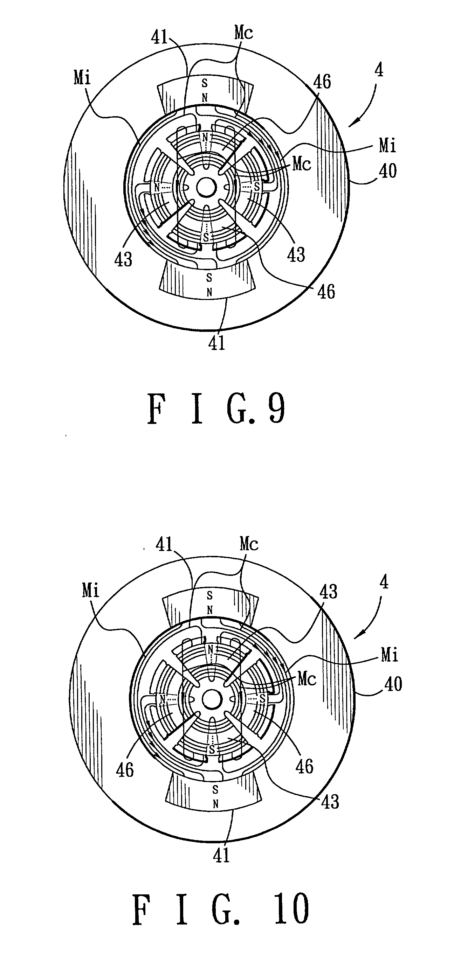

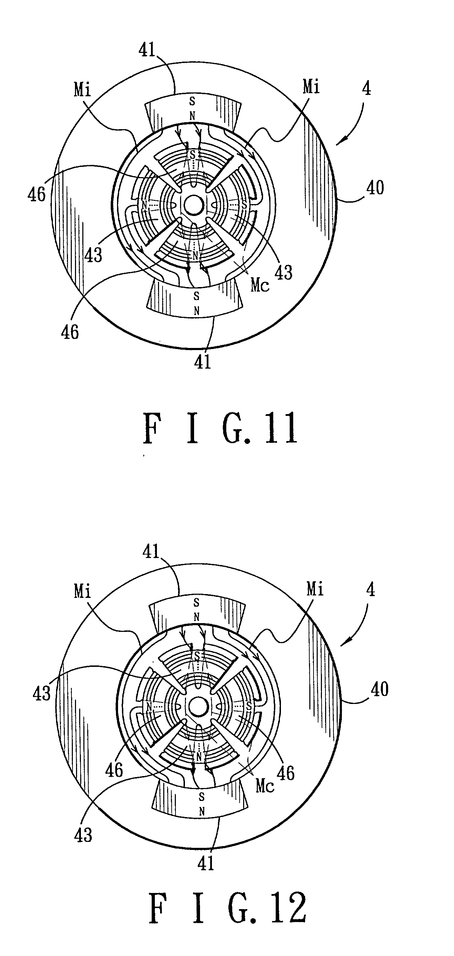

In use, when it is desired to adjust the output torque, a control signal is sent to activate the second DC power supply 6 to output a control current. For the sake of illustration, the brush members a2, c2 are supposed to contact the conductive segments a1, c1, as shown in Figure 6, while the brush members b2, d2 are in contact with the conductive segments b1, d1. The control current outputted by the second DC power supply 6 flows to the second armature windings 461 on the second core segment 46, which then function as regulating windings to generate a control magnetic field (Mc) (see Figure 9) that is substantially parallel to the first magnetic field (Mi). When the first core segments 43 are rotated to the positions as shown in Figure 10, i.e., about 90 degrees of rotation, the control current from the second DC power supply 6 is shifted to flow to the conductive segments a1, c1 while electric current from the first DC power supply 5 flows to the conductive segments b1, d1. At this point, the armature windings 431 on the first core segments 43 serve as regulating windings to generate a control magnetic field (Mc) parallel to the first magnetic field (Mi), as shown in Figure 10. Hence, when it is desired to increase the output torque, the second DC power supply 6 is activated to output a positive control current to thereby increase the flux amount of the first magnetic field (Mi) so as to induce an increased counter electromotive force in the armature 42 to decrease the speed of the motorcycle, as shown in Figures 9 and 10. Conversely, when it is desired to lower the output torque, the second DC power supply 6 is activated to output a negative control current to diminish the flux amount of the first magnetic field (Mi) so as to induce a decreased counter electromotive force in the armature 42 to increase the speed of the motorcycle, as illustrated in Figures 11 and 12.

It is known to those skilled in the art that the magnitude of the magnetic field generated is proportional to the number of turns of winding. Therefore, a plurality of connecting points may be disposed on the armature windings so that electric current may be selectively inputted into different connecting points according to, for instance, the feedback control of the speed of the motorcycle, to determine the number of turns of the armature windings to thereby generate magnetic fields of different intensities. As such, the output torque of the motor device is capable of multiple-step adjustment. Certainly, a frequency pulse modulator can be used to perform stepless control so as to achieve smoother control.

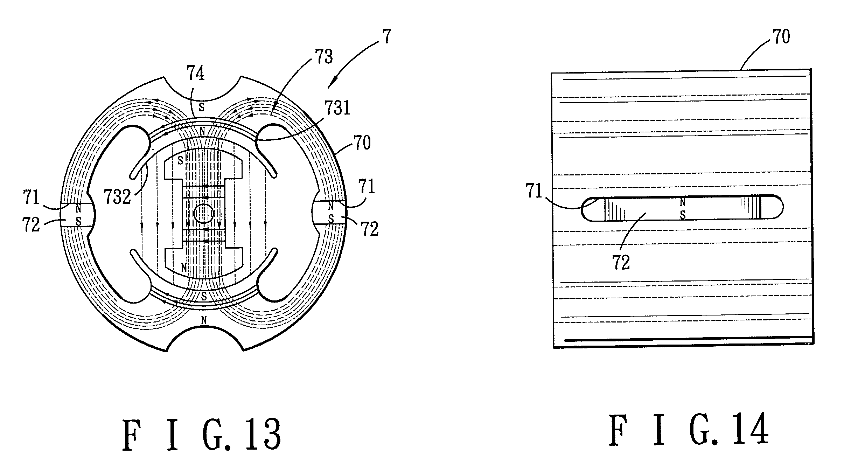

With reference to Figures 13 and 14, the fourth preferred embodiment of this invention aims to provide a motor device 7 with enhanced magnetic field intensity. In this embodiment, a magnetic frame body 70 has a surrounding wall provided with two opposite, radially extending through holes 71 that are perpendicular to the axis of the motor device 7. Each of the through holes 71 receives a permanent magnet 72. The permanent magnets 72 in the through holes 71 are oriented in the same direction. A mounting seat 73 is disposed between one pole of one of the permanent magnets 71 and a corresponding pole of the other of the permanent magnets 71, and extends inwardly of the frame body 70 so as to facilitate winding of a regulating winding 74. The mounting seat 73 has a neck portion 731 and a head portion 732 that extends substantially along the orientation of the frame body 70 so as to enable even distribution of magnetic field. As such, the lines of magnetic force of a magnetic field generated by each of the permanent magnets 72 with the regulating winding 74 extend from one of the poles to the other of the poles of the permanent magnets 72. In addition, the lines of magnetic force generated by the regulating winding 74 also extend from the part of the frame body 70 at the through holes 71 in which the permanent magnets 72 are disposed. Certainly, the arrangement of the permanent magnets 72 in this embodiment can also be adopted in the aforesaid third preferred embodiment.

With further reference to Figure 4A, plate-like permanent magnets 81 and soft iron plates 82 can be alternately arranged to form the mounting seat 73 in the fourth preferred embodiment so as to enhance the magnetic field intensity.

## Claims

1. A motor device with an automatically adjustable output torque, **characterized by**:
a hollow frame body (10) including an inner surrounding wall surface (101) that surrounds an axis and that confines an accommodating space extending in an axial direction parallel to the axis;
at least two magnetic pole pieces (11) of opposite polarity disposed on said inner surrounding wall surface (101) to extend in the axial direction and to be spaced diametrically apart from each other in a first transverse direction radial to the axial direction so as to produce a first magnetic field (Mi) having a first magnetic flux therebetween;
an armature (12) disposed to be rotatable between said two magnetic pole pieces (11), including:
an armature core (120) including front and rear ends (121, 122) opposite to each other in the axial direction and having two first core segments (123, 124) diametrically opposite to each other in a second transverse direction radial to the axis such that said two first core segments (123, 124) are alternately brought to radially and spacedly face said two magnetic polepieces (11), respectively, when saidarmature (12) is rotated about the axis; and
an armature winding (16) with first and second ends (161, 162), said armature winding (16) being disposed on said armature core (120) to produce a second magnetic field having a second magnetic flux in the second transverse direction when electric current flows therethrough via one of said first and second ends (161, 162);
an output shaft (14) disposed to extend from said front end (121) of said armature core (120) along said axis so as to be adapted to drive a wheel of a motorcycle;
a mounting shaft (141) disposed to extend from said rear end (122) of said armature core (120) and coaxial to said output shaft (14) ;
a commutator (15) disposed to be rotated with said mounting shaft (141) about said axis, said commutator (15) including two first conductive segments (151, 152) insulated from each other and respectively and electrically connected to said first and second ends (161, 162) of said armature winding (16);
two first brush members (31, 32) adapted to be respectively connected to first positive and negative electrodes of a first DC power supply (3), and disposed to respectively and slidably contact said two first conductive segments (151, 152) to provide a direct current to said armature winding (16) via one of said two first conductive segments (151, 152) through one of said first and second ends (161, 162) of said armature winding (16), respectively, so as to initiate rotation of said armature (12) as well as said commutator (15) about the axis, while inducing a counter electromotive force in said armature (12), and to subsequently maintain the rotation by alternately providing the direct current to said first and second ends (161, 162) of said armature winding (16) via alternate and sliding contact of said two first brush members (31, 32) with said two first conductive segments (151, 152), respectively;
a regulating winding (13) with third and fourth ends (21, 22) adapted to be respectively connected to second positive and negative electrodes of a second DC power supply (2), said regulating winding being disposed on one of said armature core (120) and said magnetic pole pieces (11) to produce a third magnetic field having a third magnetic flux in one of the first and second transverse directions when electric current flows therethrough via one of said third and fourth ends (21, 22) ;
a controlling member (20) adapted to be disposed between said regulating winding (13) and the second DC power supply (2) and to be actuated to permit the flow of direct current from the second DC power supply (2) through said third end (21) to increase the flux amount of said first magnetic flux by adding that of said third magnetic flux so as to induce an increased counter electromotive force in said armature (12) to thereby decrease the speed thereof when a greater torque is needed, or through said fourth end (22) to diminish the flux amount of said first magnetic flux by counteraction of said third magnetic flux which is oriented in the opposite direction relative to that of said first magnetic flux so as to result in a decreased counter electromotive force in said armature (12) to thereby increase the speed thereof when a lower torque is required; and
a sensor member (30) disposed to actuate said controlling member (20) in response to change of the speed of the wheel of the motorcycle.

2. A motor device according to Claim 1, **characterized in that** said sensor member (30) includes a feedback circuit (301) associated with the wheel such that a fluctuation of the speed of the wheel induces said feedback circuit (301) to actuate said controlling member (20) to direct the direct current from the second DC power supply (2) to flow through one of said third and fourth ends (21, 22).

3. A motor device according to Claim 1, **characterized in that** said regulating winding (13) is disposed on said magnetic pole pieces (11), and said two magnetic pole pieces (11) are two permanent magnets which include two magnetic poles of opposite polarity and oriented to be diametrically spaced from each other.

4. A motor device according to Claim 3, further **characterized in that** said regulating winding (13) includes two regulating winding units respectively disposed on said two permanent magnets so as to produce the third magnetic field having the third magnetic flux in the first transverse direction when the electric current flows therethrough via one of said third and fourth ends (21, 22).

5. A motor device according to Claim 4, further **characterized by** two mounting seat members 80 disposed on said inner surrounding wall surface (101) and diametrically spaced apart from each other in the first transverse direction to receive therein said two permanent magnets (81), each of said two mounting seat members (80) including a neck portion (84) disposed on said inner surrounding wall surface and extending in the axial direction and in the first transverse direction towards the axis so as to be wound about a centerline parallel to said first transverse direction by said regulating winding (13), and an enlarged portion (82) disposed on said neck portion (84) and distal to said inner surrounding wall surface (101) so as to form a retaining shoulder portion (85) at a juncture between said neck portion (84) and said enlarged portion (82), thereby preventing said regulating winding (13) from slipping out of said neck portion (84).

6. A motor device with an automatically adjustable output torque, **characterized by**:
a hollow frame body (40) including an inner surrounding wall surface (401) that surrounds an axis and that confines an accommodating space extending in an axial direction parallel to the axis;
at least two magnetic pole pieces (41) of opposite polarity disposed on said inner surrounding wall surface (401) to extend in the axial direction and to be spaced diametrically apart from each other in a first transverse direction radial to the axial direction so as to produce a first magnetic field (Mi)having a first magnetic flux therebetween;
an armature (42) disposed to be rotatable between said two magnetic pole pieces (41), including:
an armature core (420) including front and rear ends (421, 422) opposite to each other in the axial direction and having two pairs of first and second core segments (43, 46), each pair of which are diametrically opposite to each other in one of second and third directions transverse to each other and radial to the axis such that said pairs of first and second core segments (43, 46) are alternately brought to radially and spacedly face said two magnetic pole pieces (401) respectively when said armature (42) is rotated about the axis; and
first and second armature windings (431, 461) respectively with a first set of first and second ends (432, 433), and a second set of third and fourth ends (462, 463), which are disposed respectively on said pairs of first and second core segments (43, 46) so as to produce second and third magnetic fields having second and third magnetic fluxes in the second and third transverse directions respectively when electric current flows therethrough via one of said first and second ends (432, 433) and via one of said third and fourth ends (462, 463), respectively;
an output shaft (44) disposed to extend from said front end (421) along said axis so as to be adapted to drive a wheel of a motorcycle;
a mounting shaft (441) disposed to extend from said rear end (422) and coaxial to said output shaft;
a commutator (47) disposed to be rotated with said mounting shaft (441) about said axis, said commutator (47) including first and second pairs of conductive segments (a1, c1, b1, d1), said conductive segments (a1, c1, b1, d1) of each of said first and second pairs being disposed diametrically spaced apart from each other relative to said axis, and being insulated from each other, said conductive segments (a1, c1, b1, d1) of said first and second pairs being disposed alternately with each other, and wherein said conductive segments (a1, c1) of said first pair are respectively and electrically connected to said first and second ends (432, 433), and said conductive segments (b1, d1) of said second pair are respectively and electrically connected to said third and fourth ends (462, 463);
first and second pairs of brush members (a2, c2, b2, d2) adapted to be respectively and electrically connected to first and second DC power supplies (5, 6), said brush members (a2, c2, b2, d2) of said first and second pairs being disposed alternately with each other in terms of the rotating path of said commutator (47) ;
said brush members (a2, c2) of said first pair being disposed to respectively and slidably contact one of said first and second pairs of conductive segments (a1, c1, b1, d1) when a corresponding one of said pairs of first and second core segments (43, 46) are brought to radially and spacedly face said two magnetic pole pieces (41) respectively where a corresponding one of the second and third transverse directions is aligned with the first transverse direction, so as to provide a direct current to a corresponding one of said first and second armature windings (431, 461) via a corresponding one of said first and second sets of ends (432, 433, 462, 463) and initiate rotation of said armature (42) as well as said commutator (47) about the axis, while inducing a first counter electromotive force in said armature (42), and to subsequently maintain the rotation by alternately providing the direct current to said first and second sets of ends (432, 433, 462, 463) via alternate and sliding contact of said brush members (a2, c2) of said first pair with said first and second pairs of conductive segments (a1, c1, b1, d1), respectively;
said brush members (b2, d2) of said second pair being disposed to respectively and slidably contact the other one of said first and second pairs of conductive segments (a1, c1, b1, d1) so as to provide a direct current to the other corresponding one of said first and second armature windings (431, 461) via the other corresponding one of said first and second sets of ends (432, 433, 462, 463), so as to produce the corresponding one of said second and third magnetic fluxes in the corresponding one of the second and third transverse directions which is transverse to the first transverse direction;
a controlling member (400) adapted to be actuated to permit the flow of direct current from the second DC power supply (6) through one of said first and second ends (432, 433) or through one of said third and fourth ends (462, 463) so as to produce the corresponding one of said second and third magnetic fluxes in the corresponding one of the second and third transverse directions which is transverse to the first transverse direction, which has a flux component in the first transverse direction resulting in either an increase of the flux amount of said first magnetic flux when said flux component is at the same direction as said first magnetic flux, so as to induce an increased counter electromotive force in said armature (42) to thereby decrease the speed thereof when a greater torque is needed, or a diminishing of the flux amount of said first magnetic flux when said flux component is at the opposite direction to said first magnetic flux so as to result in a decreased counter electromotive force in said armature (42) to thereby increase the speed thereof when a lower torque is required; and
a sensor member (500) disposed to actuate said controlling member (400) in response to change of the speed of the wheel of the motorcycle.

7. A motor device with an automatically adjustable output torque, **characterized by**:
a hollow frame body (10) including an inner surrounding wall surface (101) that surrounds an axis and that confines an accommodating space extending in an axial direction parallel to the axis;
at least two magnetic pole pieces (11) of opposite polarity disposed on said inner surrounding wall surface (101) to extend in the axial direction and to be spaced diametrically apart from each other in a first transverse direction radial to the axial direction so as to produce a first magnetic field (Mi) having a first magnetic flux therebetween;
at least two mounting core pieces (90) disposed on said inner surrounding wall surface (101) to extend in the axial direction and to be spaced diametrically apart from each other in the first transverse direction radial to the axial direction, said two mounting core pieces (90) being oriented to be respectively spaced apart from and in alignment with said two magnetic pole pieces (11) in the axial direction;
an armature (12) disposed to be rotatable between said two magnetic pole pieces (11) and between said two mounting core pieces (90), including:
an armature core (120) including front and rear ends opposite to each other in the axial direction and having two first core segments (123, 124) diametrically opposite to each other in a second transverse direction radial to the axis such that said two first core segments (123, 124) are alternately brought to radially and spacedly face said two magnetic pole pieces (11), respectively, and to radially and spacedly face said two mounting core pieces (90) , respectively, when said armature (12) is rotated about the axis; and
an armature winding (16) with first and second ends (161, 162), said armature winding (16) being disposed on said armature core (120) to produce a second magnetic field having a second magnetic flux in the second transverse direction when electric current flows therethrough via one of said first and second ends (161, 162);
an output shaft (14) disposed to extend from said front end (121) of said armature core (120) along said axis so as to be adapted to drive a wheel of a motorcycle;
a mounting shaft (141) disposed to extend from said rear end of said armature core (120) and coaxial to said output shaft (14);
a commutator (15) disposed to be rotated with said mounting shaft (141) about said axis, said commutator (141) including two first conductive segments (151, 152) insulated from each other and respectively and electrically connected to said first and second ends (161, 162) of said armature winding (16);
two first brush members (31, 32) adapted to be respectively connected to first positive and negative electrodes of a first DC power supply (3), and disposed to respectively and slidably contact said two first conductive segments (151, 152) to provide a direct current to said armature winding (16) via one of said two first conductive segments (151, 152) through one of said first and second ends (161, 162) of said armature winding (16), respectively, so as to initiate rotation of said armature (12) as well as said commutator (15) about the axis, while inducing a counter electromotive force in said armature (12), and to subsequently maintain the rotation by alternately providing the direct current to said first and second ends (161, 162) of said armature winding (16) via alternate and sliding contact of said two first brush members (31, 32) with said two first conductive segments (151, 152), respectively;
a regulating winding (13) with third and fourth ends (21, 22) adapted to be respectively connected to second positive and negative electrodes of a second DC power supply (2), said regulating winding (13) being disposed on one of said two mounting core pieces (90) to produce a third magnetic field having a third magnetic flux in one of the first and second transverse directions when electric current flows therethrough via one of said third and fourth ends (21, 22);
a controlling member (20) adapted to be disposed between said regulating winding (13) and the second DC power supply (2) and to be actuated to permit the flow of direct current from the second DC power supply (2) through said third end (21) to increase the flux amount of said first magnetic flux by adding that of said third magnetic flux so as to induce an increased counter electromotive force in said armature (12) to thereby decrease the speed thereof when a greater torque is needed, or through said fourth end (22) to diminish the flux amount of said first magnetic flux by counteraction of said third magnetic flux which is oriented in the opposite direction relative to that of said first magnetic flux so as to result in a decreased counter electromotive force in said armature (12) to thereby increase the speed thereof when a lower torque is required; and
a sensor member (30) disposed to actuate said controlling member (20) in response to change of the speed of the wheel of the motorcycle.
